# FASCICULE DE BREVET EUROPEEN

(11) **EP 0 895 967 B1**
(45) Date de publication et mention de la délivrance du brevet: **10.09.2003**
(21) Numéro de dépôt: 97870114.2
(22) Date de dépôt: 31.07.1997
(51) Int. Cl.: C03B 23/045, B23B 31/12

(54) **Tête de travail pour machine de façonnage d'objets**
Arbeitskopf für Maschine zur Fertigung von Gegenständen
Working head for articles manufacturing machine

(43) Date de publication de la demande: 10.02.1999
(73) Titulaire: Euromatic s.r.l., 24047 Treviglio (IT)
(72) Inventeur: Domken, Iwan, 4890 Thimister-Clermont (BE)
(74) Mandataire: Vanderperre, Robert

(56) Documents cités:
- FR-A- 1 076 285
- FR-A- 2 418 054
- FR-A- 2 540 017
- FR-E- 63 907
- GB-A- 2 065 095

## Description

La présente invention est relative aux machines de façonnage d'objets en verre ou autre matière et elle concerne en particulier une tête de travail pour ces machines, ayant une très grande précision et une très grande robustesse et comprenant un corps cylindrique creux et des éléments de pinçage actionnés par un organe de commande coulissant coaxialement à l'intérieur du corps. Une telle tête de travail est connue du brevet FR-A-1 076 285.

A l'heure actuelle, on demande une précision de plus en plus grande pour les produits en verre destinés par exemple aux laboratoires pharmaceutiques. Or, cette qualité est corrélative à la précision des organes de la machine de fabrication de ces produits et plus particulièrement de la pince qui maintient ces objets en verre pendant leur façonnage.

La majorité des têtes de travail actuelles pour ces manipulations comportent des doits de pinçage articulés sur le corps de la tête et actionnés par un organe de commande coulissant le long et à l'extérieur du corps de la tête. Le gros inconvénient de ce type de tête est que le palier qui maintient la tête se trouve relativement loin de l'extrémité de la tête car la conception même de ces têtes oblige de prévoir l'organe de commande des doigts de pinçage et son ressort de rappel entre la tête et le palier. En conséquence, les erreurs de fabrication des roulements du palier ainsi que les erreurs d'usinage des différentes pièces constitutives de la tête sont amplifiées par le phénomène de bras de levier.

Un autre inconvénient de ce type de tête de travail est que les doigts de pinçage sont fixés par pinçage sur des pivots grâce à un serrage par vis. Les vibrations de la machine ou un coup fortuit sur un doigt de pinçage ont pour effet de dérégler le pinçage sur un objet manipulé. Ce déréglage continuel des doigts de pinçage coûte très cher aux utilisateurs de machines équipées de ce type de tête, non seulement par la mise au rebut des produits terminés défectueux avant que le technicien ne se soit aperçu de la défectuosité de la tête incriminée, mais également par les temps arrêt machine et le coût de la main d'oeuvre pour faire la réparation de cette tête.

La présente invention a pour but de remédier à ces inconvénients qui occasionnent de nombreux arrêts de machine pour réparation et nouveau réglage de la pince afin de maintenir la qualité de la production dans des normes acceptables.

Ce but est atteint, conformément à l'invention, grâce à une tête de travail telle que décrite au début, et caractérisée en ce que l'organe de commande a une forme cylindrique creuse pour permettre le passage d'un tube ou objet à façonner, une surface de guidage étant prévue sur ledit organe de commande à son extrémité ou respectivement sur ledit corps creux, à une extrémité d'une paroi intérieure de celui-ci, en ce que les éléments de pinçage sont monolithiques et disposés autour de ladite surface de guidage, en appui sur elle, de manière que le déplacement axial dudit organe de commande entraîne l'écartement ou le resserrement des éléments de pinçage concentriquement à l'axe longitudinal du corps aussi bien lorsque la tête est à l'arrêt que lorsqu'elle est en rotation.

Plus particulièrement, une première particularité du dispositif suivant l'invention réside en ce que l'organe de commande des éléments de pinçage et son ressort de rappel se trouvent montés à l'intérieur du corps de la tête. De cette manière, le palier de maintien de la tête de préhension se trouve tout près de l'extrémité de la tête, ce qui permet d'éviter le phénomène d'amplification des erreurs d'usinage des pièces constitutives des éléments de pinçage. De plus, l'organe de commande est creux de manière à permettre le passage d'un tube ou objet à façonner.

Une deuxième particularité de l'invention réside en ce que chaque élément de pinçage est constitué d'une seule et même pièce, ce qui empêche tout déplacement relatif des deux bras de l'élément de pinçage.

De préférence, chaque élément de pinçage est réglable individuellement grâce à une vis d'appui qui s'appuie directement sur l'organe de commande. Grâce à cet ajustement des éléments de pinçage il est possible de centrer parfaitement le produit pincé dans la tête.

Selon une autre forme de réalisation chaque tête et son palier font un ensemble qui peut être démonté d'un seul bloc de la machine afin de pouvoir faire le réglage de la tête sur un banc et éviter ainsi un arrêt prolongé de la machine de production.

D'autres formes de réalisation de tête de travail suivant l'invention sont indiquées dans des revendications annexées.

Les particularités et avantages de l'invention ressortiront plus clairement des dessins ci-joints et de la description qui suit.
Les figures 1 et 2 illustrent un type de tête de préhension d'objet connue, la figure 1 montrant une coupe axiale partielle et la figure 2 étant une vue de dessous.
La figure 3 montre une coupe axiale partielle d'une tête de préhension d'objet conforme à l'invention.
La figure 4 est une vue de dessous de la tête de préhension de la figure 3.

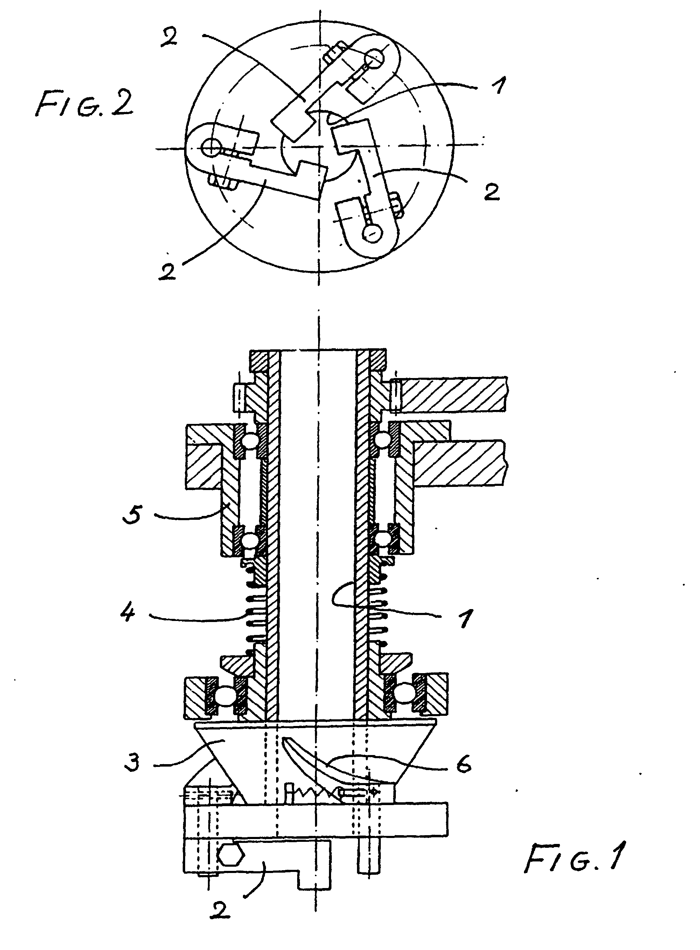

Les figures 1 et 2 montrent la constitution d'une tête de travail typique suivant la technique connue. Le chiffre 1 désigne le corps de la tête, le chiffre 2 désigne chacun des doigts de pinçage et le chiffre 3 désigne l'organe de commande de l'ouverture et de la fermeture des doigts de pinçage 2 par le truchement de leviers 6. On observe que l'organe de commande 3 est monté coaxialement à l'extérieur du corps de la tête. Le mouvement des doigts de pinçage 2 est assuré par le coulissement de l'organe de commande 3 le long du corps de la tête. Comme indiqué plus haut, la conception même de cette tête de travail nécessite de prévoir l'organe de commande 3 et son ressort de rappel 4 entre l'extrémité du corps 1 portant les doigts de pinçage 2 et le palier 5 qui maintient le corps de la tête, ce qui entraîne les inconvénients évoqués dans ce qui précède.

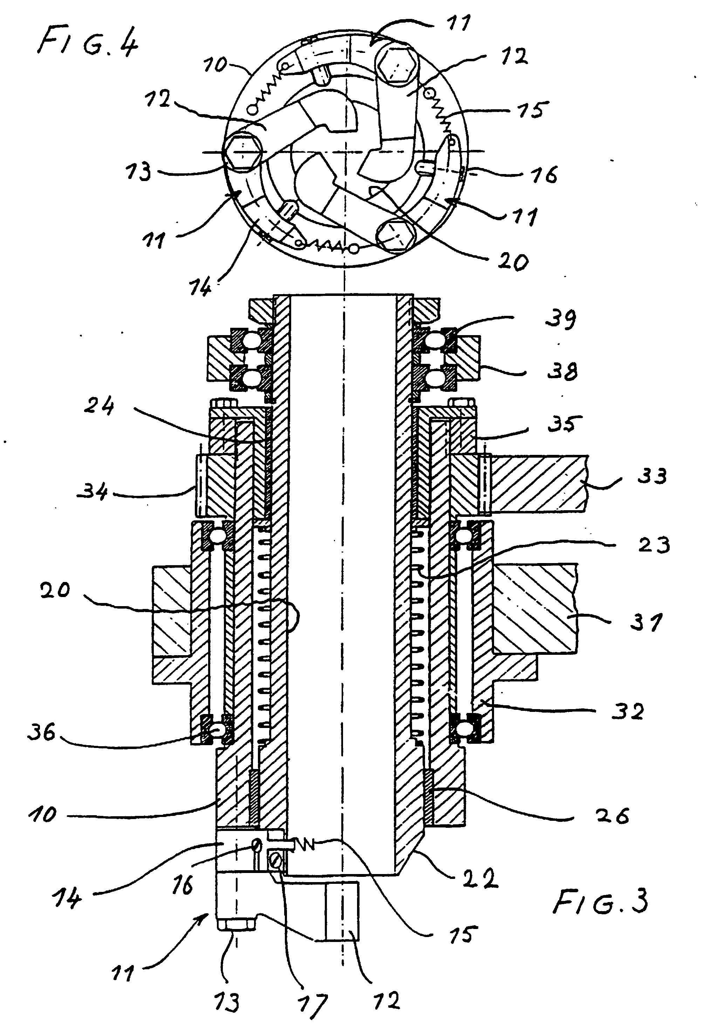

Se reportant à présent aux figures 3 et 4 on voit représenté un mode d'exécution exemplaire d'une tête de travail conforme à l'invention. La tête comprend un corps cylindrique 10 et est munie de trois éléments de pinçage 11 pivotant sur des pivots 13. Un élément de pinçage seulement est représenté à la figure 3. Chacun des éléments de pinçage comporte un bras de pinçage 12 et un bras de commande 14. Le bras de commande 14 porte une vis 16 qui s'appuie sur une surface de guidage tronconique 22 portée par un cylindre de support creux 20 permettant le passage d'un tube ou d'un objet à façonner, par exemple un tube ou objet en verre, et servant à commander l'ouverture et la fermeture des bras de pinçage 12. La vis 16 permet le réglage exact de la position du bras de pinçage 12 correspondant. Dès que cette position est parfaitement réglée, la vis 16 est bloquée dans sa position par le pinçage à l'aide d'une vis 17. L'appui de chaque bras de pinçage sur la surface de guidage 22 est maintenu par un ressort 15.

Le cylindre de support 20 est coulissant axialement dans des buselures 24 et 26 à l'intérieur du corps 10 de la tête. L'ensemble est maintenu dans un palier 32 fixé au bâti 31 d'une machine de manipulation d'objet et qui contient les deux roulements 36 dans lesquels vient s'insérer le corps 10 de la tête.

La rotation de la tête de travail est assurée par un pignon de commande 33 qui entraîne un pignon 34 de chaque tête. La tête 10 et le pignon 34 sont maintenus dans leurs roulements 36 par le blocage de l'écrou 35.

L'ouverture des éléments de pinçage se fait par le déplacement relatif de la surface de guidage 22 par rapport au corps 10 de la tête. Dans l'exemple de la figure 3, les éléments de pinçage s'ouvrent lorsque la surface de guidage 22 est déplacée vers l'intérieur de la tête par coulissement du support 20 à l'intérieur du corps de la tête. Ce coulissement est entraîné par une traction sur l'anneau 38 qui, par le truchement des roulements 39, est relié au support 20 de la surface de guidage 22. La rétraction de la surface de guidage 22 fait avancer la vis d'appui 16 vers l'intérieur sous l'action du ressort 15 et déplace ainsi le bras de commande 14 de chaque élément de pinçage. Comme les bras 14 pivotent vers l'intérieur de la tête, les bras de pinçage 12 pivotent vers l'extérieur de la tête. La fermeture des bras de pinçage 12 se fait automatiquement sous l'action d'un ressort 23 qui pousse le support 10 de la surface de guidage 22 axialement vers l'extérieur de la tête, ce qui a pour effet de faire s'écarter les bras de commande 14 vers l'extérieur. Les bras de pinçage 12 pivotent donc vers l'intérieur et pincent parfaitement l'objet à façonner.

Une variante d'exécution de la présente invention consiste à fixer les éléments de pinçage sur le support déplaçable 20 et à former une surface tronconique de guidage dans la paroi intérieure de la tête 10. Le déplacement du support 20 par rapport à la tête 10 provoque l'ouverture ou la fermeture des bras de pinçage selon le sens dudit déplacement. Il va de soi que dans cette variante le bras de commande 14 se trouve du même côté que le bras de pinçage 12.

Il est bien entendu également que les modes de réalisation illustrés sur les dessins joints sont des exemples nullement limitatifs; diverses variantes peuvent être réalisées par l'homme de l'art sans sortir du cadre des revendications.

## Revendications

1. Tête de travail pour machine de façonnage d'objets, comprenant un corps cylindrique creux (10) et des éléments de pinçage (11) actionnés par un organe de commande coulissant coaxialement à l'intérieur du corps (10), **caractérisée en ce que** l'organe de commande (20) a une forme cylindrique creuse pour permettre le passage d'un tube ou objet à façonner, une surface de guidage (22) étant prévue sur ledit organe de commande (20) à son extrémité ou respectivement sur ledit corps creux (10), à une extrémité d'une paroi intérieure de celui-ci, **en ce que** les éléments de pinçage (11) sont monolithiques et disposés autour de ladite surface de guidage (22), en appui sur elle, de manière que le déplacement axial dudit organe de commande (20) entraîne l'écartement ou le resserrement des éléments de pinçage (11) concentriquement à l'axe longitudinal du corps aussi bien lorsque la tête est à l'arrêt que lorsqu'elle est en rotation.

2. Dispositif selon la revendication 1, **caractérisé en ce que** les éléments de pinçage (11) sont fixés sur le corps (10) de la tête, et **en ce que** la surface de guidage (22) est prévue sur l'organe de commande (20).

3. Dispositif selon la revendication 1, **caractérisé en ce que** les éléments de pinçage (11) sont fixés sur l'organe de commande (20), et **en ce que** la surface de guidage est prévue sur le corps creux de la tête.

4. Dispositif selon l'une des revendications 1 à 3, **caractérisé en ce que** chaque élément de pinçage comporte un bras de pinçage (12) et un bras de commande (14) formant une seule pièce.

5. Dispositif selon la revendication 4, **caractérisé en ce que** le bras de commande (14) de chaque élément de pinçage est muni d'un élément de réglage (16).

6. Dispositif selon l'une des revendications 1 à 5, **caractérisé en ce que** l'organe de commande (20) précité est armé d'un ressort (32) monté à l'intérieur du corps (10) de la tête.

7. Dispositif selon l'une des revendications 1 à 6, **caractérisé en ce qu'**il est maintenu dans un palier (32) localisé au plus proche voisinage des éléments de pinçage (11).

8. Dispositif selon l'une des revendications 1 à 7, **caractérisé en ce qu'**il forme un ensemble démontable d'une seule pièce avec son palier de maintien et ses éléments d'actionnement.

## Patentansprüche

1. Arbeitskopf für eine Maschine zur Bearbeitung von Gegenständen, umfassend einen hohlen zylindrischen Körper (10) und Klemmelemente (11), die durch ein koaxial im Inneren des Körpers (10) gleitendes Steuerorgan betätigt werden, **dadurch gekennzeichnet, dass** das Steuerorgan (20) eine hohlzylindrische Form besitzt, um den Hindurchtritt eines zu bearbeitenden Rohrs oder Gegenstands zu gestatten, wobei auf dem besagten Steuerorgan (20) an seinem Ende beziehungsweise auf dem besagten Hohlkörper (10) an einem Ende einer Innenwand von diesem eine Führungsfläche (22) vorgesehen ist, dass die Klemmelemente (11) monolitisch und um die besagte Führungsfläche (22) herum angeordnet sind, unter Abstützung auf ihr, so dass die Axialverschiebung des besagten Steuerorgans (20) zum Auseinanderspreizen oder zum Wiederzusammenziehen der Klemmelemente (11) konzentrisch zur Längsachse des Körpers führt, sowohl wenn sich der Kopf im Stillstand befindet als auch wenn er sich dreht.

2. Vorrichtung nach Anspruch 1, **dadurch gekennzeichnet, dass** die Klemmelemente (11) auf dem Körper (10) des Kopfs befestigt sind, und dass die Führungsfläche (22) auf dem Steuerorgan (20) vorgesehen ist.

3. Vorrichtung nach Anspruch 1, **dadurch gekennzeichnet, dass** die Klemmelemente (11) auf dem Steuerorgan (20) befestigt sind, und dass die Führungsfläche auf dem hohlen Körper des Kopfs vorgesehen ist.

4. Vorrichtung nach einem der Ansprüche 1 bis 3, **dadurch gekennzeichnet, dass** jedes Klemmelement einen Klemmarm (12) und einen Steuerarm (14) aufweist, die ein einziges Teil bilden.

5. Vorrichtung nach Anspruch 4, **dadurch gekennzeichnet, dass** der Steuerarm (14) von jedem Klemmelement mit einem Einstellelement (16) versehen ist.

6. Vorrichtung nach einem der Ansprüche 1 bis 5, **dadurch gekennzeichnet, dass** das vorgenannte Steuerorgan (20) mit einer im Inneren des Körpers (10) des Kopfs montierten Feder (23) ausgestattet ist.

7. Vorrichtung nach einem der Ansprüche 1 bis 6, **dadurch gekennzeichnet, dass** sie in einem in nächster Nachbarschaft der Klemmelemente (11) befindlichen Lager (32) gehalten wird.

8. Vorrichtung nach einem der Ansprüche 1 bis 7, **dadurch gekennzeichnet, dass** sie mit ihrem Haltelager und ihren Betätigungselementen eine Einheit bildet, die als ein einziges Teil demontierbar ist.

## Claims

1. A work head for a machine for shaping objects, comprising a hollow cylindrical body (10) and pincher elements (11) actuated by an operating member which slides coaxially inside the body (10), **characterised in that** the operating member (20) has a hollow cylindrical form in order to allow the passage of a tube or object that is to be shaped, a guide surface (22) being provided on said operating member (20) at its end or respectively on said hollow body (10) at an end of an internal wall thereof, **in that** the pincher elements (11) are monolithic and arranged around said guide surface (22), while resting against it, in such a manner that the axial displacement of said operating member (20) gives rise to a parting or a closing of the pincher elements (11) concentrically to the longitudinal axis of the body, as well when the head is stopped as when it rotates.

2. The device as claimed in claim 1, **characterised in that** the pincher elements (11) are attached to the body (10) of the head and **in that** the guide surface (22) is provided on the operating member (20).

3. The device as claimed in claim 1, **characterised in that** the pincher elements (11) are attached to the operating member (20) and **in that** the guide surface (22) is provided on the hollow body of the head.

4. The device as claimed in one of claims 1 through 3, **characterised in that** each pincher element comprises a pincher arm (12) and an operating arm (14) forming a single piece.

5. The device as claimed in claim 4, **characterised in that** the operating arm (14) of each pincher element is equipped with an adjusting element (16).

6. The device as claimed in one of claims 1 through 5, **characterised in that** the aforementioned operating member (20) is loaded by a spring (32) mounted inside the body (10) of the head.

7. The device as claimed in one of claims 1 through 6, **characterised in that** it is held in a bearing (32) located very close to the pincher elements (11).

8. The device as claimed in one of claims 1 through 7, **characterised in that** it forms a unit that can be removed as a single entity with its holding bearing and its actuating elements.
